# EUROPÄISCHE PATENTSCHRIFT

(11) **EP 2 436 268 B1**
(45) Veröffentlichungstag und Bekanntmachung des Hinweises auf die Patenterteilung: **23.03.2016**
(21) Anmeldenummer: 11007707.0
(22) Anmeldetag: 22.09.2011
(51) Int. Cl.: A22C 13/00

(54) **Verfahren und Vorrichtung zur Herstellung einer Verpackungshülle für Lebensmittel**
Process and device for manufacturing a packaging wrapper for foodstuffs
Procédé et dispositif de fabrication d'une enveloppe d'emballage pour aliments

(30) Priorität: 01.10.2010 DE 102010047094
(43) Veröffentlichungstag der Anmeldung: 04.04.2012
(73) Patentinhaber: World Pac International AG, 9496 Balzers (LI)
(72) Erfinder:
(74) Vertreter: Lemcke, Brommer & Partner Patentanwälte Partnerschaft mbB

(56) Entgegenhaltungen:
- EP-A1- 0 037 023
- EP-A1- 1 977 650
- DE-A1- 2 512 995
- DE-A1- 19 818 358
- US-A1- 2001 008 658

## Beschreibung

Die Erfindung betrifft ein Verfahren und eine Vorrichtung zur Beschichtung schlauchförmiger Lebensmittel-Verpackungshüllen, insbesondere Därme, mit Aromastoffen in Partikelform, insbesondere Gewürzen, indem die schlauchförmige Verpackungshülle innenseitig mit einem Kleber benetzt wird und auf die gebildete Kleberschicht die gewünschten Aromastoffe aufgebracht werden.

Schlauchförmige Wursthüllen, die innenseitig mit Gewürzpartikeln beschichtet werden, sind in der DE 195 00 470 vorgeschlagen worden. Dabei wird von einer gerafften Wursthülle ausgegangen, die nach dem Abziehen in die zylindrische Form zunächst innenseitig mit einem flüssigen Kleber benetzt wird. Sodann gleitet die Wursthülle an einem inneren Beschichtungsring entlang, wodurch der Kleber gleichmäßiger verteilt und in der gewünschten Dicke abgestrichen werden soll. Im weiteren Verlauf wird über ein zentrales Zuführrohr Druckluft und Gewürz radial gegen die Innenfläche der Wursthülle geblasen, wo es von der aufgetragenen Kleberschicht gehalten wird. Anschließend muss die Wursthülle getrocknet werden.

Um die Haftung der Gewürze zu verbessern, kann am Ende des Zuführrohres eine rotierende Schleuderscheibe vorgesehen sein, die das Gewürz unter zusätzlichem Fliehkrafteinfluss gegen die Innenseite der Wursthülle schleudert.

In der Praxis hat sich dieses System jedoch nicht bewährt, weil keine gleichmäßige und genügend starke Beschichtung mit Aromastoffen auf Dauer gewährleistet war.

Stattdessen ist es immer noch üblich, schlauchförmige Hüllen, die mit Gewürz beschichtet werden sollen, zuerst in Form von Flachfolien herzustellen und zu beschichten. Erst anschließend wird die beschichtete Flachfolie dann in Schlauchform gebracht, indem sie durch passende Formschultern in Zylinderform gebracht und dann entlang ihrer benachbarten oder sich überlappender Längsränder durch Nähen oder Kleben verschlossen wird.

Dieser Prozess ist zeit- und energieaufwendig, denn der Kleber muss in feuchtem, flüssigem Zustand auf die Folie aufgebracht werden mit der Folge, dass die Folie nach dem Aufbringen der Aromastoffe einer intensiven Trocknung unterzogen werden muss. Erst nach dem Trocknen kann die mit Kleber und Gewürz beschichtete Flachfolie dann in Schlauchform gebracht und durch Nähen, Kleben oder Schweißen verschlossen und konfektioniert werden.

Hingegen wären diese Verarbeitungsschritte im Feuchtezustand der Folie sowohl aus hygienischen wie auch aus arbeitstechnischen Gründen unmöglich.

Durch die EP 0 037 023 ist es bereits bekannt, eine schlauchförmige Verpackungshülle für Lebensmittel an ihrer Innenseite mit wässriger Kunststoff-Dispersion zu beschichten. Dazu wird der Schlauch in Form einer hängenden Schlaufe geführt und in den Hohlraum dieser Schlaufe eine bestimmte Menge Kunststoff-Dispersion eingefüllt. Oberhalb des gefüllten Schlaufenteiles wird der Schlauch dann durch ein Walzenpaar hindurchgezogen, wobei der Abstand zwischen den Walzen einen Dosierspalt für die Dicke der aufgebrachten Kunststoff-Dispersion definiert. Anschließend erfolgt die Trocknung der aufgetragenen wässrigen Kunststoff-Dispersion durch Erhitzung des Schlauches in einem Trockentunnel. Im Ergebnis erhält man dadurch eine Schlauchhülle, die aufgrund ihres inneren Kunststoff-Filmüberzuges keiner unerwünschten Schrumpfung mehr unterliegt.

Von diesem Stand der Technik ausgehend, liegt der vorliegenden Erfindung die Aufgabe zugrunde, ein Verfahren zur Beschichtung mit Aromastoffen, die nicht in einer Trägerflüssigkeit schwimmen, sondern in Partikelform vorliegen, also insbesondere Gewürzen, Kräuter, pulverisierten Fruchtaromen und dergleichen, zu entwickeln. Dabei soll als Ausgangsmaterial keine Flachfolie, sondern direkt schlauchförmige Verpackungsfolie verwendet werden, und zwar sowohl Naturdärme wie auch ein- oder mehrlagige Faserdärme, Kunststoffdärme und beliebige sonstige schlauchförmige Textilhüllen. Des Weiteren soll die erfindungsgemäße Verpackungsfolie raffbar sein, damit sie gut gelagert, transportiert und insbesondere bei automatischen Füll- und Klippmaschinen weiterverarbeitet werden kann, ohne dass beim Raffen ein lokales Abplatzen der Gewürze zu befürchten ist.

Diese Aufgabe wird erfindungsgemäß durch ein Verfahren gemäß Anspruch 1 und eine Vorrichtung gemäß Anspruch 18 gelöst, wobei die schlauchförmige, innseitig mit Kleber beschichtete Verpackungshülle durch eine erste und eine in Vorschubrichtung folgende weitere Quetschzone geführt wird, wo jeweils der innere Querschnitt der schlauchförmigen Verpackungsfolie momentan verschlossen wird, dass die weitere Quetschzone höher liegt als die erste Quetschzone, dass die schlauchförmige Verpackungshülle im Bereich zwischen den beiden genannten Quetschzonen durch einen in das Schlauchinnere eingebrachten Vorrat der partikelförmigen Aromastoffe und ein Luftpolster in die Form eines aufgeblasenen Sackes gebracht wird und dass die Verpackungshülle an ihrer mit Kleber beschichteten Innenseite Aromastoffe mitnimmt, wenn die Verpackungshülle durch den Aromastoff-Vorrat hindurchgezogen wird.

Die Erfindung beruht auf der Erkenntnis, dass das Gewicht der in den aufgeblasenen Sack eingefüllten Aromapartikel in Verbindung mit dem darüber befindlichen Luftpolster eine intensive Anlagerung derselben an der mit Kleber beschichteten Innenseite der Verpackungshülle bewirkt und dass andererseits das in der oberen Quetschzone erfolgende Zusammenpressen der Verpackungshülle eine stabile Verbindung zwischen der Kleberschicht und den Aromapartikeln bewirkt. Die erfindungsgemäße Verpackungshülle kann dadurch mit einer, höheren Dichte an Aromastoffen und mit größerer Zuverlässigkeit beschichtet werden.

Das Sack-Prinzip zur Beschichtung ist zwar schon seit über 50 Jahren für Flüssigkeiten bekannt. So ist es durch die US 2,901,358 bekannt, einen für Wursthüllen bestimmten Celluloseschlauch zunächst mit Glycerin vorzubehandeln, so dass er eine etwa gelartige Konsistenz erhält und den Schlauch dann zwischen einer unteren und einer oberen Quetschzone mit einer wasserlöslichen Chromchlorid-Lösung sowie einem Luftpolster zu füllen. Wird der Schlauch dann durch die beiden genannten Quetschzonen hindurchgezogen, erhält er an seiner Innenseite eine Beschichtung mit der Chromchlorid-Lösung. Hinter der zweiten Quetschzone wird der Schlauch wieder durch ein Luftpolster in aufgeblasene Form gebracht und durch Heißluft von 100°C bis 110°C auf eine Restfeuchtigkeit von 4 % bis 6 % getrocknet, worauf er dann in Flachform gebracht und auf einer Rolle aufgewickelt wird. Diese Innenbeschichtung dient dazu, dass die Wursthülle später von der eingefüllten Wurst leichter abgeschält werden kann. Es lag aber nicht nahe, dieses Prinzip so abzuwandeln, dass eine Beschichtung mit partikelförmigen Aromastoffen ermöglicht wird, die nicht in einer Trägerflüssigkeit schwimmen, sondern in trockener Form vorliegen.

Das Luftpolster, das oberhalb der Aromastoffe in den Sack eingebracht und beim Durchziehen der Verpackungshülle durch die Quetschzonen auch weitgehend aufrechterhalten werden soll, hat im Wesentlichen die Aufgabe, den Aromastoff von der oberen Quetschzone des Sackes distanziert zu halten, damit keine Klumpen aus dem Aromastoff-Vorrat in die obere Quetschzone gelangen, sondern nur die an der Innenseite der Verpackungshülle anhaftenden Partikel.

Dieses Luftpolster erstreckt sich vorzugsweise zumindest über ¼ der Sackhöhe. Es wird zweckmäßig immer dann erzeugt, wenn eine neue Verpackungshülle in die Beschichtungsanlage eingefädelt wird, und zwar konkret dann, wenn der Anfang der Verpackungshülle die untere Quetschzone passiert, die obere Quetschzone aber noch nicht ganz erreicht hat. In dieser Position der Verpackungshülle wird zunächst der Aromastoff-Vorrat in die Verpackungshülle eingefüllt, und zwar vorzugsweise in einer solchen Menge, dass die gesamte von der Vorratsrolle kommende Verpäckungshülle bis zu ihrem Ende mit Aromastoffen beschichtet werden kann. Daran anschließend wird dann vor dem Einfädeln des genannten Anfangsabschnittes der Verpackungshülle in die obere Quetschzone dafür gesorgt, dass oberhalb des Aromastoff-Vorrates ein genügend großes Polster mit Stützluft verbleibt, um den Aromastoff-Vorrat von der oberen Quetschzone zu distanzieren. Dieses Luftpolster kann in einfacher Weise durch Einblasen von Luft erzeugt werden.

Selbstverständlich liegt es auch im Rahmen der Erfindung, zuerst das Luftpolster zu erzeugen, um die Verpackungshülle in Sackform zu bringen und danach oder gleichzeitig den Aromastoff-Vorrat einzufüllen.

Alternativ liegt es auch im Rahmen der Erfindung, die Aromapartikel und das Luftpolster erst dann in die Verpackungshülle einzubringen, wenn ihr Anfang bereits die obere Quetschzone passiert hat. In diesem Fall wird unterhalb der oberen Quetschzone ein Loch in die Verpackungshülle gemacht und durch dieses Loch werden die gewünschten Mengen eingebracht. Sodann wird der Vorschub der Verpackungshülle angestellt, so dass der gelochte Bereich die obere Quetschzone passiert und somit das eingebrachte Luftpolster abdichtet.

Damit das Luftpolster während des Beschichtungsverfahrens seine Funktion beibehält, den Aromastoff-Vorrat von der oberen Quetschzone zu distanzieren, empfiehlt es sich, dass die Verpackungshülle aus einem allenfalls wenig luftdurchlässigen oder nahezu luftdichten Material besteht.

Falls der Aromastoff-Vorrat und/oder das Luftpolster während des Beschichtungsverfahrens zur Neige gehen, kann selbstverständlich jederzeit der Vorschub der Verpackungshülle durch die Quetschzonen unterbrochen, eine Öffnung unterhalb der oberen Quetschzone in die Verpackungshülle eingeschnitten und durch diese Öffnung die Aromapartikel und/oder Stützluft nachgefüllt werden.

Das erwünschte Aufbringen der partikelförmigen Aromastoffe durch das so genannte Sack-Prinzip funktioniert nur dann, wenn die Verpackungshülle zuvor zumindest innenseitig klebrige Eigenschaften aufweist. Dazu wird zweckmäßig in einem eigenen Behandlungsschritt Kleber zumindest innenseitig auf die Verpackungshülle aufgebracht, das heißt, dass das Aufbringen des Klebers und das Aufbringen des Aromastoffes in getrennten, vorzugsweise direkt aufeinander folgenden Stationen stattfindet.

Es liegt dabei im Rahmen der Erfindung, zusammen mit dem Klebstoff und/oder den Aromastoffen einen Konservierungsstoff zuzugeben, insbesondere Kaliumsorbat oder dergleichen.

Zur Benetzung der Verpackungshülle mit einem essbaren Kleber wird sie zweckmäßig in eine nicht-flache, offene Querschnittsform gebracht und der Kleber vom Zentrum aus auf die Innenseite der Verpackungshülle aufgebracht. Dies gelingt besonders vorteilhaft bei Anwendung des vorbeschriebenen Sack-Prinzips, indem die Verpackungshülle vor der Beschichtung mit Aromastoffen in die Form eines Sackes gebracht wird, in welchen ein Kleber-Vorrat - zweckmäßig mit einem Stütz-polster aus Luft - eingefüllt wird. Der obere Abschluss dieses mit Kleber gefüllten Sackes kann durch die erste Quetschzone des mit Aromastoffen gefüllten Sackes oder durch eine zusätzliche Quetschzone erfolgen. In beiden Fällen empfiehlt es sich, dass der obere Abschluss des mit Kleber gefüllten Sackes oberhalb des Kleber-Vorrates angeordnet ist.

Der untere Abschluss des Sackes mit dem Klebstoffvorrat kann durch eine eigene vorgeschaltete Quetschzone gebildet werden. Im Allgemeinen kann diese Quetschzone aber ohne zusätzlichen Aufwand allein schon durch die Anlage der Verpackungshülle an ihrer Vorratsrolle realisiert werden.

Der Kleber-Vorrat sollte zumindest in einer solchen Menge in den Sack eingefüllt werden, dass dies für die Beschichtung der gesamten Verpackungshülle, zumindest aber für den gesamten Aromastoff-Vorrat ausreicht.

Alternativ kann der Kleber auch von außen auf die Verpackungshülle aufgebracht werden, dann nämlich, wenn mit einer saugfähigen Verpackungshülle gearbeitet wird, die dann ggf. mit einer oder mehreren Außenlagen, insbesondere einer Barriereschicht, einer Anti-Keimbildungsschicht oder dergleichen, beschichtet wird, insbesondere durch coating. Bei einem solchen Aufbringen des Klebers von außen kann die Verpackungshülle in ihrer flachen Querschnittsform, in der sie von der Vorratsrolle abgezogen wird, verbleiben.

Da der Aromastoff-Vorrat während des Beschichtens ständig abnimmt und gleichzeitig auch ein gewisser Teil des Luftpolsters durch die obere Quetschzone hindurch entweicht, kann das Volumen des aufgeblasenen Sackes variiert werden, insbesondere mit fortschreitender Beschichtung allmählich verringert werden. Dies kann zweckmäßig dadurch erfolgen, dass der Abstand zwischen den beiden Quetschzonen unterhalb und oberhalb des Sackes verringert wird.

Eine vorteilhafte Weiterbildung der Erfindung besteht darin, am oberen Ende des Sackes nicht nur eine, sondern mehrere Quetschzonen vorzusehen. Dadurch verbessert sich die Abdichtung des Sackes, so dass weniger Luft aus dem Luftpolster von der Verpackungshülle mitgenommen wird. Insbesondere wird dadurch der Verbund der Verpackungshülle mit den von ihr mitgenommenen Aromapartikeln verbessert.

Eine besonders zweckmäßige Weiterbildung der Erfindung besteht darin, dass die Verpackungshülle nach ihrer Beschichtung mit den Aromastoffen ohne eine anschließende Trocknung und/oder Erhitzung in eine geraffte Form gebracht wird. Sie ist dadurch optimal zur Weiterverarbeitung in den bekannten automatischen Füll- und Doppelclipsmaschinen geeignet.

Vorzugsweise ist das Raffen der Verpackungshülle kombiniert mit einem automatischen Ablängen, so dass man am Ende des Beschichtungsverfahrens geraffte Teilstücke in handelsüblicher Länge erhält.

Der Verzicht auf die ansonsten übliche Erhitzung und Trocknung der Verpackungshülle ist erfindungsgemäß dadurch möglich, weil die bei der KleberBeschichtung sich einstellende hohe Feuchtigkeit der Verpackungshülle durch das sofort anschließende Aufbringen der staubtrockenen Aromapartikel drastisch reduziert wird und weil dem Kleber eine ausreichende Menge Konservierungsmittel zugemischt wird.

Im Ergebnis erhält man so eine fertige Verpackungshülle, die mit ihrem Kleber und den Aromastoffen eine Feuchtigkeit von etwa 10 %, maximal etwa 20 % aufweist. Die Verpackungshülle unterliegt dann keinem nennenswerten Keimbildungsrisiko, insbesondere kann sie nach der Beschichtung mit den Aromastoffen ohne zwischenzeitliche Trocknung direkt weiterverarbeitet, insbesondere aufgewickelt oder gerafft werden.

Für die Ausbildung der Quetschzonen bieten sich dem Fachmann verschiedene Möglichkeiten. So können die Quetschzonen etwa durch trichterartige Einschnürungen der schlauchförmigen Verpackungsfolie - eventuell kombiniert mit einer Tordierung - erzeugt werden. Besonders günstig ist es aber, die Quetschzonen durch Quetschrollen zu erzeugen, wo die schlauchförmige Verpackungsfolie in eine flache Form gezwungen wird, wo also die Wände der schlauchförmigen Verpackungsfolie in dichte Anlage miteinander gebracht werden. Eine besonders zuverlässige Abdichtung in der oberen Quetschzone wird dadurch herbeigeführt, dass die Verpackungsfolie nicht nur mit einer Quetschrolle in eine flache Form gebracht wird, sondern dass zwei Quetschrollen parallel nebeneinander angeordnet werden, die keinen oder nur einen minimalen Spalt zum Durchlass der Verpackungshülle aufweisen, so dass die Umformung des aufgeblasenen Sackes in die Flachform mit einer zusätzlichen Kompression der beiden aufeinander liegenden Schlauchlagen kombiniert wird. Man erhält dadurch eine besonders wirksame Einbettung der pulverförmigen Aromastoffe in die Kleberschicht der Verpackungshülle.

Damit das Zusammenpressen ohne lokale Beschädigung der relativ dünnen Verpackungshülle gewährleistet ist, haben die Quetschrollen vorzugsweise einen gummielastischen Außenmantel, etwa aus Moosgummi oder dergleichen.

Außerdem lässt sich die Anpresswirkung zwischen den Schlauchlagen noch dadurch erhöhen, dass die Quetschrollen an ihrem Außenmantel in Axialrichtung laufende Rippen, also gewissermaßen eine leichte Außenverzahnung aufweisen, wobei die Rippen benachbarter Rollen miteinander kämmen, also ineinander greifen.

Wenn eine besonders starke Belegung der Verpackungshülle mit Aromastoffen gewünscht wird, bietet sich in Weiterbildung des Erfindungsgedankens die Möglichkeit, die Aromastoffe nicht nur durch das Eigengewicht der normalen Füllmenge, sondern durch Einbringen eines größeren Aromastoff-Vorrates als für die gesamte Verpackungshülle erforderlich, zu belasten. Außerdem kann der Druck auf die Aromastoffe noch dadurch erhöht werden, dass der Aromastoffvorrat durch Auflegen einer relativ schweren Druckplatte belastet wird. Diese Druckplatte kann eine Querschnittsfläche haben, die nur wenig geringer ist als die Querschnittsfläche des aufgeblasenen Sackes, so dass die darunter befindlichen Aromastoffe nicht nur durch ihr Eigengewicht, sondern durch ein bedeutend höheres Zusatzgewicht belastet und gegen die Innenseite der Verpackungshülle gedrückt werden.

Bei Versuchen mit dem erfindungsgemäßen Verfahren hat sich überraschend gezeigt, dass die Gewürze eine kleinere Partikelgröße als bisher üblich aufweisen sollten. Vorzugsweise werden deshalb Gewürze einer Partikelgröße entsprechend 8 Mesh bis 400 Mesh, insbesondere entsprechend 30 Mesh bis 50 Mesh verwendet.

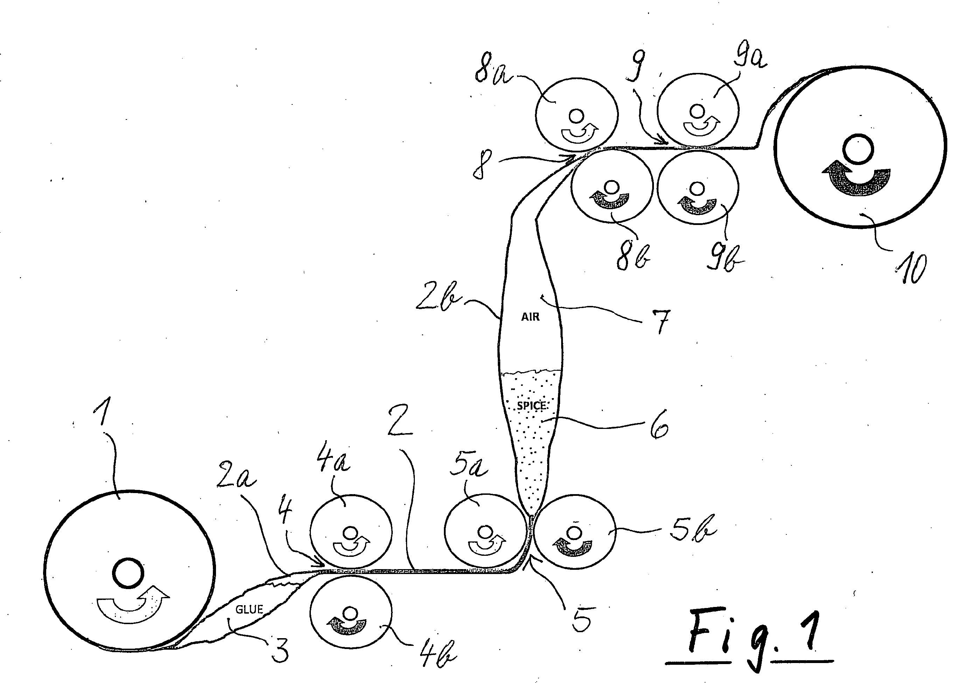

Weitere Merkmale und Vorteile der Erfindung ergeben sich aus der nachfolgenden Beschreibung eines Ausführungsbeispieles und aus der Zeichnung; dabei zeigt
- Fig. 1: eine schematische Darstellung des kompletten Beschichtungsverfahrens, wobei die fertig beschichtete Verpackungshülle am Ende aufgerollt wird;
- Fig. 2: die gleiche Darstellung, wobei die Verpackungshülle am Ende gerafft wird.

Ausgegangen wird von einer Vorratsrolle 1, auf welcher die schlauchförmige Verpackungshülle 2 in flacher Form aufgewickelt ist. Die Vorratsrolle 1 kann beispielsweise eine 40 m bis 500 m lange Verpackungshülle aufnehmen.

Als Verpackungshülle kommen Hüllen aus unterschiedlichstem Material in Betracht. Beispielsweise kann es sich um Faserdärme, die mit Viskose verstärkt sind, handeln, oder um Collagendärme oder getrocknete Naturdärme wie auch um beschichtete Textildärme, Gerüstdärme, die mit Collagen, Carrageen oder Acrylat beschichtet sind oder sonstige ein- und mehrlagige Hüllen, sofern sie keine all zu hohe Luftdurchlässigkeit aufweisen.

In den Beginn der Verpackungshülle 2, der sich als offenes Schlauchende darstellt, wird ein an sich bekannter, lebensmittelrechtlich zugelassener flüssiger Klebstoff 3 und eventuell auch Stützluft eingefüllt, so dass die Verpackungshülle die Form eines Sackes 2a erhält, der teilweise oder vollständig mit Klebstoff 3 gefüllt ist. Die Klebstoffmenge wird so bemessen, dass die gesamte auf der Vorratsrolle 1 aufgewickelte Verpackungshülle mit Klebstoff beschichtet werden kann. Die Verpackungshülle 2 wird in trockener Form dem Klebstoff zugeführt, so dass er gut aufgenommen wird. Wenn die Verpackungshülle schlecht mit Klebstoff benetzbar ist, kann sie ggf. eine saugfähige Innenlage aufweisen.

Gleichzeitig kann in den Sack 2a auch ein pulverförmiges oder flüssiges Konservierungsmittel, insbesondere auf Basis von Kaliumsorbat eingefüllt werden, damit die Verpackungshülle trotz hohen Feuchtigkeitsgehaltes vor Schimmelbildung geschützt ist. Alternativ oder zusätzlich kann dieses Konservierungsmittel auch später, zusammen mit den Aromastoffen zugeführt werden.

Als Kleber eignet sich insbesondere Stärke, Casein, Collagen, Carrageen, Alginat und dergleichen, jeweils in niedrig-viskoser Lösung, um eine gute Benetzung sicherzustellen.

Das untere Ende des mit Klebstoff gefüllten Sackes 2a wird im Ausführungsbeispiel durch seine dichte, den Sack verschließende Anlage an der Vorratsrolle 1 gebildet. Stattdessen könnte hier auch eine Quetschzone in Form von Quetschrollen oder dergleichen angeordnet sein.

Anschließend gelangt die Verpackungshülle zwischen zwei Quetschrollen 4a und 4b. Diese Quetschrollen drücken die Verpackungsfolie in eine flache Form und definieren durch ihre Quetschkraft die Klebstoffmenge, die beim Passieren der beiden Quetschrollen von der Verpackungshülle an ihrer Innenseite mitgenommen werden kann.

Sodann gelangt die Verpackungshülle zu einer Quetschzone 5, die durch zwei Quetschrollen 5a und 5b gebildet ist, nach deren Passieren die Verpackungshülle wieder die Form eines Sackes annimmt, der nach oben ansteigt und zwar zweckmäßig etwa senkrecht nach oben und der durch das Bezugszeichen 2b markiert ist. Dieser Sack ist in seinem unteren Bereich mit staubtrockenen Aromapartikeln 6, insbesondere Gewürzen entsprechend 30 Mesh bis 50 Mesh, also einer Korngröße von etwa 0,3 mm bis 0,6 mm gefüllt. Die Quetschzone 5 ist hinsichtlich ihrer Anpressung gegen die flach gehaltenen und aneinander liegenden Wände der Verpackungshülle so ausgebildet, dass die Aromastoffe 6 nicht nach unten aus dem Sack 2b herausrutschen können.

Im oberen Bereich des Sackes befindet sich ein Luftpolster 7. Dieses Luftpolster 7 hat im Wesentlichen die Aufgabe, die Gewürze 6 vom oberen Sackende, das durch eine weitere Quetschzone 8 in Form zweier Quetschrollen 8a und 8b gebildet wird, zu distanzieren, so dass nur diejenigen Gewürzpartikel den Spalt zwischen den Quetschrollen 8a und 8b passieren können, die an der Innenwand der Verpackungshülle 2 haften, also keine Gewürzklumpen aus dem Vorrat 6 von den Quetschrollen erfasst und weiterbefördert werden.

Die Quetschrollen haben wesentlich größere Durchmesser als übliche Führungsrollen. Dies in Verbindung mit ihrem gummielastischen Außenmantel führt dazu, dass ein in Vorschubrichtung der Verpackungsfolie mehrere Zentimeter breiter Streifen entsteht, wo die Verpackungshülle zusammengepresst wird.

Das Einbringen der Gewürze 6 wie auch des Luftpolsters 7 erfolgt beim Einfädeln einer neuen Verpackungshülle, bevor der Beginn der Verpackungshülle die Quetschzone 8 erreicht. Nach Passieren der Quetschrollen 8a und 8b ergibt sich dann eine Abdichtung des Sackes 2b und gleichzeitig werden die von der Verpackungshülle nach oben mitgenommenen Gewürzteilchen durch die Quetschrollen 8a und 8b gegen die Innenwand der Verpackungshülle gepresst, so dass sie bei der weiteren Verarbeitung der Verpackungshülle gut daran haften und nicht abfallen.

Der Abstand zwischen der unteren Quetschzone 5 und der oberen Quetschzone 8 ist zweckmäßigerweise veränderlich, insbesondere dadurch, dass die Quetschrollen der oberen Quetschzone 8 nach unten verfahren werden können, um das während der Beschichtung abnehmende Volumen des Sackes 2b zu kompensieren. Dadurch ist sichergestellt, dass die Verpackungshülle eine pralle Sackform beibehält, auch wenn der Sack selbst mit zunehmender Beschichtung immer kürzer wird, weil sich die Quetschzonen 5 und 8 annähern.

Direkt hinter der Quetschzone 8 folgt zweckmäßig eine weitere Quetschzone 9, die durch Quetschrollen 9a und 9b gebildet ist. Sie intensiviert den Verbund zwischen der Verpackungshülle und den mitgenommenen Gewürzen und verbessert die Abdichtung gegenüber dem Luftpolster 7.

Schließlich gelangt die fertig beschichtete Verpackungshülle - ggf. über weitere Führungsrollen - zu einer Aufwickelrolle 10.

Sobald die Verpackungshülle durch sämtliche Quetschrollen durchgefädelt und dabei mit Klebstoff 3, Gewürzen 6 und Luftpolster 7 gefüllt, und an der Aufwickelrolle 9 befestigt worden ist, läuft sie kontinuierlich von der Vorratsrolle 1 zur Aufwickelrolle 9 und wird dabei beschichtet. Der Vorschub der Verpackungshülle erfolgt zweckmäßig durch die Quetschrollen selbst. Im Allgemeinen genügt es dabei, wenn immer nur eine von zwei miteinander korrespondierenden Quetschrollen angetrieben wird, im Ausführungsbeispiel ist dies jeweils die Quetschrolle mit dem geschwärzten Drehrichtungspfeil.

Eine Zwischentrocknung der Verpackungshülle erübrigt sich, denn durch entsprechende Prozessführung wird ihre Feuchtigkeit nach der Gewürzbeschichtung bei etwa 10 % bis maximal etwa 20 % gehalten.

Vorzugsweise ist in allen Quetschzonen eine der beiden Quetschrollen hinsichtlich ihres Abstandes zur benachbarten Quetschrolle verstellbar, um das Einfädeln der Verpackungshülle 2 zu erleichtern.

Die beschriebene Verpackungshülle 2 kann aus nahezu beliebigem Material bestehen, ein oder mehrlagig ausgebildet sein, ggf. auch mit einer rauen oder saugfähigen Innenlage und/oder mit Beschichtungen und/oder mit Laminaten, insbesondere um die Hülle gegenüber Wasserdampf und/oder Sauerstoff weitgehend undurchlässig zu machen.

Im Ausführungsbeispiel wird die beschichtete Verpackungshülle 2 in flacher Form einer Aufwickelrolle 10 zugeführt. Stattdessen ist es aber auch möglich, die Verpackungshülle online zu raffen.

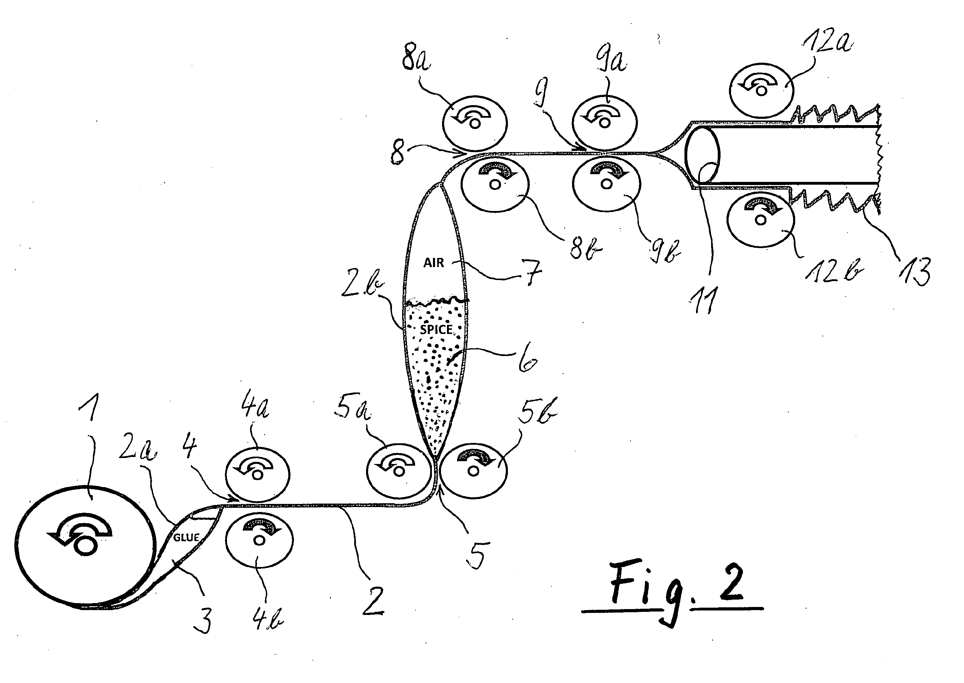

Diese besonders bevorzugte Variante ist in Figur 2 dargestellt. Die fertig beschichtete Verpackungshülle 2 wird dazu axial auf ein zylindrisches Raffrohr 11 gefördert, und zwar mittels mehrerer über den Umfang verteilter Raffrollen, von denen zwei Raffrollen 12a und 12b sichtbar sind. Nach Passieren dieser Raffrollen werden etwa 5 m bis etwa 50 m lange Abschnitte der Verpackungshülle, durch axiale Stauchung in Ziehharmonika-artige Raupen 13 geformt, wie sie bevorzugt von der Fleischwaren- und Käseindustrie gewünscht werden.

Der Raffvorgang selbst ist an sich bekannt und wird deshalb nicht weiter im Detail beschrieben. Wesentlich ist aber, dass sich der Raffvorgang direkt an die Innenbeschichtung der Verpackungshülle mit Gewürzpartikeln anschließt, ohne dass die Verpackungshülle einer Erhitzung bzw. Trocknung bedarf. Dadurch ergibt sich eine erhebliche Energieeinsparung.

Mit der beschriebenen Technologie können erstmalig schlauchförmige Verpackungshüllen als Ausgangsmaterial für eine innere Gewürzbeschichtung zur Verfügung gestellt werden, so dass das bisher notwendige Vernähen oder Verkleben entlang den Längsseiten der zylindrischen Folien entfällt. Außerdem können die erfindungsgemäßen Verpackungshüllen ohne Kantenbruch-Gefahr in geraffte Form gebracht und auf den bekannten automatischen Füll- und Doppelklipsmaschinen rationell verarbeitet werden. Sie eignen sich für unterschiedlichste Lebensmittel, insbesondere für Fleisch, Wurst, Fisch oder Käse.

## Patentansprüche

1. Verfahren zur Beschichtung schlauchförmiger Lebensmittel-Verpackungshüllen (2), insbesondere Därme mit Aromastoffen in Partikelform, insbesondere Gewürzen, indem die schlauchförmige Verpackungshülle (2) innenseitig mit Kleber benetzt wird und auf die gebildete Kleberschicht die gewünschten Aromastoffe (6) aufgebracht werden,
wobei die schlauchförmige, innenseitig mit Kleber beschichtete Verpackungshülle (2) durch eine erste Quetschzone (5) und eine in Vorschubrichtung folgende weitere Quetschzone (8) geführt wird, wo jeweils der innere Querschnitt der schlauchförmigen Verpackungshülle momentan verschlossen wird, dass die weitere Quetschzone (8) höher liegt als die erste Quetschzone (5), dass die schlauchförmige Verpackungsfolie im Bereich zwischen den beiden Quetschzonen (5, 8) durch einen in das Schlauchinnere eingebrachten partikelförmigen Aromastoff-Vorrat (6) und ein Luftpolster (7) in die Form eines aufgeblasenen Sackes (2b) gebracht wird und dass die Verpackungshülle an ihrer mit Kleber beschichteten Innenseite während ihres Vorschubes Aromastoffe (6) aus dem Vorrat mitnimmt.

2. Verfahren nach Anspruch 1,
**dadurch gekennzeichnet,**
**dass** das Aufbringen des Klebers (3) und das Aufbringen des Aromastoffes (6) in getrennten Stationen erfolgt.

3. Verfahren nach Anspruch 1,
**dadurch gekennzeichnet,**
**dass** die Verpackungshülle (2) mit einem Konservierungsmittel, insbesondere Kaliumsorbat, imprägniert wird, vorzugsweise gleichzeitig mit dem Aufbringen des Klebers (3).

4. Verfahren nach Anspruch 1,
**dadurch gekennzeichnet,**
**dass** die schlauchförmige Verpackungshülle (2) zur innenseitigen Benetzung mit Kleber in eine nicht-flache, offene Querschnittsform gebracht wird und der Kleber vom Zentrum aus auf die Innenseite der Verpackungshülle aufgebracht wird.

5. Verfahren nach Anspruch 4,
**dadurch gekennzeichnet,**
**dass** die Beschichtung der Verpackungshülle (2) mit Kleber (3) vor der ersten Quetschzone (5) erfolgt, indem die Verpackungshülle dort ebenfalls in die Form eines Sackes (2a) gebracht wird, in welchen ein Kleber-Vorrat (3) eingefüllt ist.

6. Verfahren nach Anspruch 5,
**dadurch gekennzeichnet,**
**dass** der obere Abschluss des Kleber-Sackes (2a) durch die erste Quetschzone (5) für die Aromastoffe des Sackes (2b) oder durch eine zusätzliche Quetschzone (4) erfolgt.

7. Verfahren nach Anspruch 5,
**dadurch gekennzeichnet,**
**dass** die obere Quetschzone (4) des mit Kleber gefüllten Sackes (2a) oberhalb des Kleber-Vorrates (3) angeordnet ist.

8. Verfahren nach Anspruch 5,
**dadurch gekennzeichnet,**
**dass** der Kleber-Vorrat zumindest in einer solchen Menge in den Sack (2a) eingefüllt wird, die für die Beschichtung der gesamten Verpackungshülle (2) ausreicht.

9. Verfahren nach Anspruch 1,
**dadurch gekennzeichnet,**
**dass** mit einer saugfähigen Verpackungshülle (2) gearbeitet wird, die von außen mit Kleber getränkt und dann mit zumindest einer Außenlage, Barriereschicht, Anti-Keimbeschichtung etc. beschichtet wird.

10. Verfahren nach Anspruch 1 oder 5,
**dadurch gekennzeichnet,**
**dass** das Volumen des Sackes (2a, 2b) variiert werden kann, insbesondere während der fortschreitenden Beschichtung allmählich verringert wird.

11. Verfahren nach Anspruch 1 oder 5,
**dadurch gekennzeichnet,**
**dass** die Position der Quetschzonen (4, 5, 8) in Längsrichtung der Verpackungshülle (2) veränderlich ist.

12. Verfahren nach Anspruch 1 oder 6,
**dadurch gekennzeichnet,**
**dass** die Quetschzonen (4, 5, 8) durch trichterartige Einschnürungen der schlauchförmigen Verpackungshülle (2) erzeugt werden.

13. Verfahren nach Anspruch 1 oder 6,
**dadurch gekennzeichnet,**
**dass** die Quetschzonen (4, 5, 8) jeweils durch Umlenkrollen (4a, 4b; 5a, 5b; 8a, 8b) erzeugt werden, wo die schlauchförmige Verpackungshülle (2) einer Anpressung unterzogen wird.

14. Verfahren nach Anspruch 1,
**dadurch gekennzeichnet,**
**dass** in dem Aromastoff-Vorrat (6) Gewürze mit einer Partikelgröße entsprechend 8 Mesh bis 400 Mesh, vorzugsweise etwa 30 Mesh bis etwa 50 Mesh verwendet werden.

15. Verfahren nach Anspruch 1,
**dadurch gekennzeichnet,**
**dass** der in den Sack (2b) eingefüllte Aromastoff-Vorrat (6) zusätzlich durch ein Gewicht belastet wird, insbesondere ein Gewicht, dessen Außendurchmesser nahezu dem maximalen Innendurchmesser des Sackes (2b) entspricht.

16. Verfahren nach Anspruch 1
**dadurch gekennzeichnet,**
**dass** die Verpackungshülle (2) in flach aufgewickelter Form von einer Vorratsrolle (1) abgezogen und nach Aufbringen des Klebers (3) direkt - insbesondere ohne Trocknung - der Aromastoff-Beschichtung zugeführt wird.

17. Verfahren nach Anspruch 1,
**dadurch gekennzeichnet,**
**dass** die Verpackungshülle (2) nach ihrer Beschichtung mit den Aromastoffen (6) ohne anschließende Trocknung in eine geraffte Form gebracht, insbesondere in geraffte Teilstücke, nämlich Raupen (13), handelsüblicher Länge separiert wird.

18. Vorrichtung zur Durchführung des Verfahrens nach einem der vorhergehenden Ansprüche, wobei
die Quetschzonen (4, 5, 8, 9) jeweils zwei rotierende Rollen (4a, 4b, 5a, 5b, 8a, 8b, 9a, 9b) aufweisen, die ohne Spalt oder mit minimalem Spalt parallel zueinander angeordnet sind und die Verpackungshülle (2) zwischen sich flach zusammenpressen und wobei die Rollen (4a, 4b, 5a, 5b, 8a, 8b, 9a, 9b) einen gummielastischen Außenmantel, insbesondere aus Moosgummi aufweisen,
**dadurch gekennzeichnet,**
**dass** die Rollen (4a, 4b, 5a, 5b, 8a, 8b, 9a, 9b) an ihrem Außenmantel in Axialrichtung laufende Rippen aufweisen und benachbarte Rollen über diese Rippen formschlüssig miteinander in Eingriff stehen.

19. Vorrichtung nach Anspruch 18,
**dadurch gekennzeichnet,**
**dass** die Rollen (4a, 4b, 5a, 5b, 8a, 8b, 9a, 9b) einen gummielastischen Außenmantel, insbesondere aus Moosgummi aufweisen.

20. Vorrichtung nach Anspruch 18,
**dadurch gekennzeichnet,**
**dass** die Rollen (4a, 4b, 5a, 5b, 8a, 8b, 9a, 9b) in Querrichtung und gegebenenfalls in Längsrichtung der Verpackungshülle verstellbar gelagert sind.

21. Vorrichtung nach Anspruch 18,
**dadurch gekennzeichnet,**
**dass** mehrere Quetschzonen (8, 9) am oberen Ende des mit Aromastoff gefüllten Sackes (2b) angeordnet sind.

## Claims

1. Method for coating tubular food casings (2), especially intestines, with flavourings in particulate form, especially seasonings, by wetting the tubular casing (2) on its inner side with adhesive and applying the desired flavourings (6) to the resulting adhesive layer,
wherein the tubular casing (2) coated on its inner side with adhesive is guided through a first squeezing zone (5) and a further squeezing zone (8) which follows in the direction of advance, in each of which zones the internal cross-section of the tubular casing is momentarily closed; the further squeezing zone (8) is located at a higher level than the first squeezing zone (5); in the region between the two squeezing zones (5, 8) the tubular packaging film is formed into the shape of an inflated bag (2b) by a supply of particulate flavourings (6) introduced into the interior of the tube and by an air cushion (7); and the casing, as it advances, takes up flavourings (6) from the supply on its adhesive-coated inner side.

2. Method according to claim 1,
**characterised in that**
the application of the adhesive (3) and the application of the flavouring (6) takes place in separate stations.

3. Method according to claim 1,
**characterised in that**
the casing (2) is impregnated with a preservative, especially potassium sorbate, preferably simultaneously with the application of the adhesive (3).

4. Method according to claim 1,
**characterised in that**
for being wetted on its inner side with adhesive, the tubular casing (2) is formed into a non-flat, open cross-sectional shape and the adhesive is applied to the inner side of the casing from the centre outwards.

5. Method according to claim 4,
**characterised in that**
the coating of the casing (2) with adhesive (3) is effected at a location upstream of the first squeezing zone (5), where the casing is likewise formed into the shape of a bag (2a) into which a supply of adhesive (3) is introduced.

6. Method according to claim 5,
**characterised in that**
the upper closure of the adhesive bag (2a) is effected by the first squeezing zone (5) for the flavourings of the bag (2b) or by an additional squeezing zone (4).

7. Method according to claim 5,
**characterised in that**
the upper squeezing zone (4) of the adhesive-filled bag (2a) is arranged above the supply of adhesive (3).

8. Method according to claim 5,
**characterised in that**
the supply of adhesive is introduced into the bag (2a) at least in an amount sufficient for coating the entire casing (2).

9. Method according to claim 1,
**characterised in that**
the casing used is an absorbent casing (2) which is saturated with adhesive from the outside and then coated with at least one outer layer, barrier layer, anti-germ coating etc.

10. Method according to claim 1 or 5,
**characterised in that**
the volume of the bag (2a, 2b) can be varied, especially gradually reduced as the coating operation progresses.

11. Method according to claim 1 or 5,
**characterised in that**
the position of the squeezing zones (4, 5, 8) can be altered in the longitudinal direction of the casing (2).

12. Method according to claim 1 or 6,
**characterised in that**
the squeezing zones (4, 5, 8) are created by funnel-like constrictions of the tubular casing (2).

13. Method according to claim 1 or 6,
**characterised in that**
the squeezing zones (4, 5, 8) are each created by guide rollers (4a, 4b; 5a, 5b; 8a, 8b) where the tubular casing (2) is subjected to compression.

14. Method according to claim 1,
**characterised in that**
the seasonings used in the supply of flavourings (6) have a particle size corresponding to from 8 mesh to 400 mesh, preferably from approximately 30 mesh to approximately 50 mesh.

15. Method according to claim 1,
**characterised in that**
the supply of flavourings (6) introduced into the bag (2b) is additionally loaded by a weight, especially a weight having an external diameter that corresponds almost to the maximum internal diameter of the bag (2b).

16. Method according to claim 1
**characterised in that**
the casing (2) is removed in flat rolled-up form from a supply roll (1) and, after application of the adhesive (3), supplied directly - especially without drying - to the flavouring coating.

17. Method according to claim 1,
**characterised in that**
after it has been coated with the flavourings (6), the casing (2), without subsequent drying, is shaped into a shirred form, especially separated into shirred sections, that is to say sticks (13), of commercially customary length.

18. Device for carrying out the method according to any one of the preceding claims,
wherein the squeezing zones (4, 5, 8, 9) each have two rotating rollers (4a, 4b, 5a, 5b, 8a, 8b, 9a, 9b) which are arranged parallel to one another, without a gap or with a minimal gap, and compress the casing (2) flat between them, and wherein the rollers (4a, 4b, 5a, 5b, 8a, 8b, 9a, 9b) have a rubber-elastic outer covering, especially made of foamed rubber,
**characterised in that**
the rollers (4a, 4b, 5a, 5b, 8a, 8b, 9a, 9b) have axially extending ribs on their outer covering, and adjacent rollers are in interlocking engagement with one another by way of those ribs.

19. Device according to claim 18,
**characterised in that**
the rollers (4a, 4b, 5a, 5b, 8a, 8b, 9a, 9b) have a rubber-elastic outer covering, especially made of foamed rubber.

20. Device according to claim 18,
**characterised in that**
the rollers (4a, 4b, 5a, 5b, 8a, 8b, 9a, 9b) are mounted so as to be displaceable in the transverse direction and optionally in the longitudinal direction of the casing.

21. Device according to claim 18,
**characterised in that**
a plurality of squeezing zones (8, 9) are arranged at the upper end of the flavouring-filled bag (2b).

## Revendications

1. Procédé pour enduire des enveloppes d'emballage tubulaires (2) pour aliments, en particulier des boyaux, de substances aromatiques sous forme de particules, en particulier d'épices, par le fait que l'enveloppe d'emballage tubulaire (2) est imprégnée de colle sur le côté intérieur et que les substances aromatiques souhaitées (6) sont appliquées sur la couche de colle formée,
sachant que l'enveloppe d'emballage tubulaire (2), imprégnée de colle sur le côté intérieur, est dirigée à travers une première zone d'écrasement (5) et une autre zone d'écrasement (8) consécutive dans la direction d'avancement, zones dans chacune desquelles la section intérieure de l'enveloppe d'emballage tubulaire est momentanément fermée, que l'autre zone d'écrasement (8) est située plus haut que la première zone d'écrasement (5), que le film d'emballage tubulaire est, dans la région située entre les deux zones d'écrasement (5, 8), amené sous la forme d'un sac gonflé (2b) par un approvisionnement (6) de substance aromatique sous forme de particules introduit à l'intérieur du tube et par un coussin d'air (7), et que l'enveloppe d'emballage, pendant son avancement, entraîne avec elle les substances aromatiques (6) à partir de l'approvisionnement sur son côté intérieur enduit de colle.

2. Procédé selon la revendication 1, **caractérisé en ce que** l'application de la colle (3) et l'application de la substance aromatique (6) s'effectuent à des postes séparés.

3. Procédé selon la revendication 1, **caractérisé en ce que** l'enveloppe d'emballage (2) est imprégnée d'un agent de conservation, en particulier de sorbate de potassium, de préférence en même temps que l'application de la colle (3).

4. Procédé selon la revendication 1, **caractérisé en ce que** l'enveloppe d'emballage tubulaire (2) est, pour l'imprégnation de colle sur le côté intérieur, amenée sous une forme de section ouverte non plate, et la colle est appliquée à partir du centre sur le côté intérieur de l'enveloppe d'emballage.

5. Procédé selon la revendication 4, **caractérisé en ce que** l'enduction de l'enveloppe d'emballage (2) de colle (3) s'effectue avant la première zone d'écrasement (5), par le fait que l'enveloppe d'emballage y est également amenée sous la forme d'un sac (2a) dans lequel est rempli un approvisionnement de colle (3).

6. Procédé selon la revendication 5, **caractérisé en ce que** la fermeture supérieure du sac de colle (2a) s'effectue par la première zone d'écrasement (5) pour les substances aromatiques du sac (2b) ou par une zone d'écrasement supplémentaire (4).

7. Procédé selon la revendication 5, **caractérisé en ce que** la zone d'écrasement supérieure (4) du sac (2a) rempli de colle est disposée au-dessus de l'approvisionnement de colle (3).

8. Procédé selon la revendication 5, **caractérisé en ce que** l'approvisionnement de colle est rempli dans le sac (2a) au moins dans une quantité qui suffit pour l'enduction de la totalité de l'enveloppe d'emballage (2).

9. Procédé selon la revendication 1, **caractérisé en ce qu'**on travaille avec une enveloppe d'emballage absorbante, qui est imprégnée de colle de l'extérieur puis revêtue d'au moins une couche extérieure, couche de barrière, couche anti-germes, etc.

10. Procédé selon la revendication 1 ou 5, **caractérisé en ce qu'**on peut faire varier le volume du sac (2a, 2b), en particulier on le réduit peu à peu tandis que l'enduction progresse.

11. Procédé selon la revendication 1 ou 5, **caractérisé en ce que** la position des zones d'écrasement (4, 5, 8) dans la direction longitudinale de l'enveloppe d'emballage (2) est variable.

12. Procédé selon la revendication 1 ou 6, **caractérisé en ce que** les zones d'écrasement (4, 5, 8) sont produites par des constrictions en entonnoir de l'enveloppe d'emballage tubulaire (2).

13. Procédé selon la revendication 1 ou 6, **caractérisé en ce que** les zones d'écrasement (4, 5, 8) sont respectivement produites par des rouleaux de renvoi (4a, 4b ; 5a, 5b ; 8a, 8b), où l'enveloppe d'emballage tubulaire (2) est soumise à une pression de serrage.

14. Procédé selon la revendication 1, **caractérisé en ce qu'**on utilise dans l'approvisionnement (6) de substance aromatique des épices ayant une taille de particules correspondant à 8 mesh à 400 mesh, de préférence d'environ 30 mesh jusqu'à environ 50 mesh.

15. Procédé selon la revendication 1, **caractérisé en ce que** l'approvisionnement (6) de substance aromatique rempli dans le sac (2b) est en outre sollicité par un poids, en particulier un poids dont le diamètre extérieur correspond quasiment au diamètre intérieur maximal du sac (2).

16. Procédé selon la revendication 1, **caractérisé en ce que** l'enveloppe d'emballage (2) est dévidée d'une bobine d'alimentation (1) où elle est enroulée à plat et, après l'application de la colle (3), elle est apportée directement - en particulier sans séchage - au processus d'enduction de substance aromatique.

17. Procédé selon la revendication 1, **caractérisé en ce que** l'enveloppe d'emballage (2) est, après son enduction avec les substances aromatiques 6), sans séchage consécutif, amenée sous une forme plissée, en particulier est séparée en tronçons plissés, à savoir des boudins (13), de longueur commerciale habituelle.

18. Dispositif pour la mise en oeuvre du procédé selon l'une des revendications précédentes,
sachant que les zones d'écrasement (4, 5, 8, 9) présentent chacune deux rouleaux rotatifs (4a, 4b, 5a, 5b, 8a, 8b, 9a, 9b), qui sont disposés parallèlement entre eux sans interstice ou avec un interstice minimal et qui compriment à plat entre eux l'enveloppe d'emballage (2), et sachant que les rouleaux (4a, 4b, 5a, 5b, 8a, 8b, 9a, 9b) présentent une enveloppe extérieure ayant l'élasticité du caoutchouc, en particulier en caoutchouc mousse,
**caractérisé en ce que** les rouleaux (4a, 4b, 5a, 5b, 8a, 8b, 9a, 9b) présentent sur leur enveloppe extérieure des nervures s'étendant en direction axiale, et les rouleaux voisins se trouvent en engagement positif mutuel par l'intermédiaire de ces nervures.

19. Dispositif selon la revendication 18, **caractérisé en ce que** les rouleaux (4a, 4b, 5a, 5b, 8a, 8b, 9a, 9b) présentent une enveloppe extérieure ayant l'élasticité du caoutchouc, en particulier en caoutchouc mousse,

20. Dispositif selon la revendication 18, **caractérisé en ce que** les rouleaux (4a, 4b, 5a, 5b, 8a, 8b, 9a, 9b) sont montés avec possibilité de réglage dans la direction transversale et éventuellement dans la direction longitudinale de l'enveloppe d'emballage.

21. Dispositif selon la revendication 18, **caractérisé en ce que** plusieurs zones d'écrasement (8, 9) sont disposées à l'extrémité supérieure du sac (2b) rempli de substance aromatique.
